# EUROPÄISCHE PATENTSCHRIFT

(11) **EP 2 493 687 B1**
(45) Veröffentlichungstag und Bekanntmachung des Hinweises auf die Patenterteilung: **19.04.2017**
(21) Anmeldenummer: 10763188.9
(22) Anmeldetag: 07.10.2010
(51) Int. Cl.: B29C 70/58, B32B 5/02, B32B 29/02, B32B 3/12, C08J 5/24

(54) **VERWENDUNG VON ANORGANISCHEN PARTIKELN ZUR HERSTELLUNG EINER SPERRSCHICHT AUF FLUGZEUGKOMPONENTEN**
USE OF INORGANIC PARTICLES FOR THE PRODUCTION OF A BARRIER LAYER ON AIRCRAFT COMPONENTS
UTILISATION DE PARTICULES ANORGANIQUES POUR LA FABRICATION D'UNE COUCHE BARRIÈRE SUR COMPOSANTS D'AÉRONEF

(30) Priorität: 27.10.2009 DE 102009050787; 27.10.2009 US 255220 P
(43) Veröffentlichungstag der Anmeldung: 05.09.2012
(73) Patentinhaber: Airbus Operations GmbH, 21129 Hamburg (DE)
(72) Erfinder: TURANSKI, Peter, 27305 Süstedt (DE); BUSCH, Heinz-Peter, 28844 Weyhe (DE); SCHOKE, Berend, 27239 Twistringen (DE); ÖSTEREICH, Wilko, 28857 Syke-Barrien (DE)
(74) Vertreter: Lorenz & Kopf PartG mbB Patentanwälte, LKGLOBAL
(86) Internationale Anmeldenummer: PCT/EP2010/064999
(87) Internationale Veröffentlichungsnummer: WO 2011/051090

(56) Entgegenhaltungen:
- EP-A2- 0 196 493
- DE-C1- 4 420 613
- US-A- 4 259 398
- US-A1- 2003 170 418
- DATABASE CA [Online] CHEMICAL ABSTRACTS SERVICE, COLUMBUS, OHIO, US; 12. Mai 1984 (1984-05-12), ASNOVICH, L. Z. ET AL: "Electrically insulating tape", XP002612558, gefunden im STN Database accession no. 1984:157932 -& SU 878 081 A1 (USSR) 15. Dezember 1983 (1983-12-15)

## Beschreibung

Die vorliegende Erfindung betrifft Kunststoffbauteile mit einer Glimmer-haltigen Sperrschicht und deren Verwendung als Flugzeugbauteile mit verbessertem Brandverhalten.

Der Anteil von Kunststoffen im Flugzeugbau wird kontinuierlich erhöht. Dabei ist das Verhalten von Kunststoffen im Brandfall ein entscheidendes Auswahlkriterium für die Matrixwerkstoffe wie auch für die Verstärkungsfasern.

An die in Flugzeugen verwendeten Kunststoffmaterialien werden hinsichtlich ihres Durchbrand- und Flammenausbreitungsverhaltens hohe Anforderungen gestellt. Gleichzeitig müssen diese Materialien gewissen mechanischen Anforderungen genügen und sollten außerdem ein möglichst geringes Gewicht aufweisen. Bei vielen Kunststoffen verhalten sich die Eigenschaften gegenläufig, so dass z.B. eine Optimierung des Gewichts oder der mechanischen Eigenschaften auf Kosten der Brandeigenschaften erzielt wird. Will man andererseits das Brandverhalten optimieren, führt dies häufig zu teuren und schweren Bauweisen.

Grundsätzlich ist der Einsatz von Glimmerpartikeln in Form eines sogenannten Glimmerpapiers als Brandschutzkomponente in Primärisolierungen für Flugzeuge bekannt. Dabei wird das Glimmerpapier zwischen zwei Folien eingebracht, wodurch ein mehrlagiges glimmerhaltiges Laminat gebildet wird. Zusammen mit Glaswolle kann das Laminat dann als Isolationssystem zur Verbesserung des Durchbrandverhaltens in einem Flugzeug eingesetzt werden.

Um die Brandanforderungen sicherstellen zu können, werden heute auch intrinsisch schwer entflammbare Kunststoffe oder Kunststoffe, die durch Zugabe von Flammschutzmitteln hinsichtlich ihres Brandverhaltens optimiert wurden, eingesetzt.

Weiterhin ist bekannt, Sperrschichten auf Kunststoffen, insbesondere bei Faserverbundbauweise, in Form von Metallfolien wie z.B. Aluminiumfolien anzubringen. Bei der Verwendung solcher Metallfolien als Sperrschichten ergeben sich aber einige Nachteile wie z.B. eine geringere Temperaturbeständigkeit (geringere Sperrwirkung bei hohen Temperaturen), Korrosion oder eine unerwünschte elektrische Leitfähigkeit.

Unter Berücksichtigung der obigen Ausführungen besteht eine Aufgabe der vorliegenden Erfindung darin, kunststoffhaltige Bauteile für ein Flugzeug (z.B. den druckbelüfteten Raum eines Flugzeugs) bereit zu stellen, die ein möglichst gutes Brandverhalten wie z.B. hohe Durchbranddauer, geringe Entflammbarkeit oder geringe Rauchdichte zeigen, gleichzeitig aber eine möglichst hohe Flexibilität bei der Auswahl geeigneter Kunststoffe zur Optimierung des Gewichts und/oder mechanischen Verhaltens ermöglichen. Weiterhin ist erwünscht, dass Werkstoffe mit geringen Materialkosten eingesetzt werden können und sich Bauteile durch ein einfaches und kostengünstiges Verfahren herstellen lassen.

Gelöst wird diese Aufgabe durch ein Kunststoffbauteil, ein Verfahren und die Verwednung eines Kunstsoffbauteils nach einem der unabhängigen Ansprüche. Beispielhafte Ausführungsformen sind in den Unteransprüchen angegeben. In einem Beispiel ist die Bereitstellung eines Kunststoffbauteils für ein Flugzeug vorgesehen, das Kunststoffbauteil umfassend
(i) ein Substrat, das einen oder mehrere duroplastische Kunststoffe umfasst, und
(ii) eine oder mehrere Schichten, die auf dem Substrat aufgebracht sind, wobei zumindest eine Schicht S1 Glimmer umfasst.

Die Glimmer beinhaltende Schicht S1 (nachfolgend auch als Sperrschicht bezeichnet) zeichnet sich durch eine sehr hohe Temperaturbeständigkeit und sehr gute Sperrwirkung im Brandfall aus. Es wird eine signifikante Verzögerung der thermischen Freisetzung von Kunststoffbestandteilen bewirkt und führt unter anderem zu einer Verbesserung hinsichtlich Rauchdichte, Menge an toxischen Brandgaskomponenten, Wärmefreisetzung, Brennbarkeit, Durchbrandverhalten (z.B. von Strukturbauteilen und/oder im Frachtraum).

Im Rahmen der vorliegenden Erfindung wird der Begriff "duroplastischer Kunststoff" in seiner üblichen, dem Fachmann geläufigen Bedeutung verwendet und bezieht sich auf einen Kunststoff, der nach seiner Aushärtung nicht mehr verformt bzw. aufgeschmolzen werden kann und als relativ harter Polymerwerkstoff vorliegt.

Bevorzugt wird der duroplastische Kunststoff aus einem Epoxidharz, einem Phenolharz, einem Polyesterharz, insbesondere einem ungesättigten Polyesterharz, einem Triazinharz, einem Biopolymerharz, bevorzugt einem solchen aus nachwachsenden organischen Rohstoffen (wie z.B. einem Polyfurfuryl-Alkohol-Harz) oder einem Gemisch dieser Harze ausgewählt.

Im Rahmen der vorliegenden Erfindung sind die Begriffe "Epoxidharz", "Phenolharz", "Triazinharz" und "Polyesterharz" so zu verstehen, dass neben den für diese Harze typischen Monomereinheiten auch andere Comonomereinheiten zumindest in einem gewissen Anteil vorliegen können.

In einer bevorzugten Ausführungsform handelt es sich bei dem Substrat um einen Verbundwerkstoff. Der Begriff "Verbundwerkstoff" wird im Rahmen der vorliegenden Erfindung in seiner üblichen, dem Fachmann geläufigen Bedeutung verwendet und bezieht sich daher auf einen Werkstoff mit einer Kunststoffmatrix und darin vorliegenden Verstärkungsfasern. Bevorzugt enthält die Kunststoffmatrix zumindest einen duroplastischen Kunststoff. Hinsichtlich geeigneter duroplastischer Kunststoffe kann auf die obigen Ausführungen verwiesen werden, d.h. bevorzugt handelt es sich bei dem duroplastischen Kunststoff um ein Epoxidharz, ein Phenolharz, ein Polyesterharz, insbesondere ein ungesättigtes Polyesterharz, ein Triazinharz, ein Biopolymerharz, bevorzugt ein solches aus nachwachsenden organischen Rohstoffen (wie z.B. ein Polyfurfuryl-Alkohol-Harz) oder ein Gemisch dieser Harze.

Hinsichtlich geeigneter Verstärkungsfasern für den Verbundwerkstoff kann auf gängige, dem Fachmann bekannte Fasern verwiesen werden. Bevorzugt werden die Verstärkungsfasern aus Glasfasern, Kohlefasern, Naturfasern, Polyethylenfasern, insbesondere hochverstreckten Polyethylenfasern, Aramidfasern, oder Kombinationen dieser Fasern ausgewählt.

Wie oben ausgeführt, ist/sind eine oder mehrere Schichten auf dem Substrat angebracht, wobei zumindest eine Schicht S1 Glimmer umfasst.

Im Rahmen der vorliegenden Erfindung können die dem Fachmann geläufigen Typen von Glimmer verwendet werden, z.B. Phlogopit, Muskowit, Fluorphlogopit, Mikanit, oder deren Gemische. Bevorzugte Glimmertypen sind Phlogopit, Muskowit oder deren Gemische.

Glimmer sind Schichtsilikate, die meist eine plättchenförmige Kristallmorphologie aufweisen. Um das Brandverhalten der Glimmer haltigen Sperrschicht möglichst zu optimieren, ist es bevorzugt, dass der Glimmer in der Schicht S1 parallel zur Substratoberfläche orientiert vorliegt, d.h. eine möglichst gleichmäßige Ausrichtung der Glimmerpartikel verwirklicht wird. Dies kann z.B. durch geeignete Auftragungsverfahren erreicht werden, die nachfolgend noch ausführlicher beschrieben werden.

Gemäß der Erfindung liegt der Glimmer in der Schicht S1 in einer Menge von mindestens 80 Gew.-%vor, bevorzugt mindestens 90 Gew%, noch bevorzugter mindestens 95 Gew%. Im Rahmen der vorliegenden Erfindung ist es auch möglich, dass die Schicht S1 vollständig aus Glimmer besteht.

Je nach Anforderungsprofil kann entweder die Schicht S1 direkt auf dem Substrat aufgebracht sein oder es kann eine weitere Schicht zwischen der Schicht S1 und dem Substrat angebracht sein. Ist eine weitere Schicht zwischen der Schicht S1 und dem Substrat angebracht, so kann diese weitere Schicht bevorzugt einen Klebstoff enthalten. Bevorzugt ist die Schicht S1 direkt auf dem Substrat angebracht, d.h. der Glimmer ist unmittelbar in Kontakt mit der Substratoberfläche.

Im Rahmen der vorliegenden Erfindung kann die Glimmer beinhaltende Schicht S1 entweder nur auf einer Oberflächenseite des Substrats oder alternativ auf Vorder- und Rückseite des Substrats vorliegen.

Gemäß der Erfidnung liegt der Glimmer in einer Menge von < 50 g/m² Substratoberfläche vor, bevorzugter < 30 g/m² Substratoberfläche, noch bevorzugter < 10 g/m² Substratoberfläche. Die Mindestmenge an Glimmer auf der Substratoberfläche kann z.B. 25 g/m² oder 15 g/m² oder auch 5 g/m² Substratoberfläche betragen.

Gemäß eines weiteren Aspekts der vorliegenden Erfindung wird ein Flugzeugbauteil bereit gestellt, welches das oben beschriebene Kunststoffbauteil umfasst.

Bei diesen Flugzeugbauteilen kann es sich z.B. um Kabinenbauteilen, Frachtraumverkleidungen, elektrische und/oder elektronische Baugruppen, Komponenten bzw. Bauteile im druckbelüfteten Raum, Komponenten des Flügels oder Komponenten des Flugzeugrumpfes handeln.

Gemäß eines weiteren Aspekts betrifft die vorliegende Erfindung ein Verfahren zur Herstellung des oben beschriebenen Kunststoffbauteils, umfassend die Bereitstellung eines Substrat, das zumindest einen duroplastischen Kunststoff oder zumindest ein zu einem duroplastischen Kunststoff vernetzbares Polymer umfasst, und das Aufbringen einer oder mehrerer Schichten auf das Substrat, wobei zumindest eine Schicht S1 Glimmer umfasst.

Hinsichtlich geeigneter duroplastischer Kunststoffe und Glimmertypen kann auf die obigen Ausführungen verwiesen werden.

Der Begriff "ein zu einem duroplastischen Kunststoff vernetzbares Polymer" bezieht sich auf die noch nicht ausgehärtete Vorstufe des duroplastischen Polymers, d.h. des noch ungehärteten duroplastischen Kunststoffs.

Grundsätzlich kann das Aufbringen der Schicht bzw. Schichten auf das Substrat, welches bevorzugt ein Verbundwerkstoff ist, vor, während und/oder nach dem Aushärten des duroplastischen Kunststoffs erfolgen. Gemäß der Erfindung wird die Glimmer-haltige Schicht S1 direkt auf dem Substrat aufgebracht und das Aufbringen der Schicht S1 erfolgt vor und/oder während des

Aushärtens des duroplastischen Kunststoffs. In diesem noch nicht ausgehärteten Zustand ist das Polymerharz noch klebrig und kann daher die Fixierung der Schicht(en) auf der Substratoberfläche unterstützen.

Beispielsweise kann die Herstellung bzw. Bereitstellung des Substrats in Form eines Prepreg erfolgen. Das Aufbringen der Glimmer enthaltenden Schicht S1 erfolgt bevorzugt zu einem Zeitpunkt, in dem die Aushärtung des Kunststoffs noch nicht erfolgt bzw. noch nicht abgeschlossen ist. Auf diese Weise erfolgt also die Fixierung bzw. feste Anbindung der Schicht S1 auf dem Substrat während des Aushärtungsschrittes des duroplastischen Kunststoffes. Der Begriff "Prepreg" wird im Rahmen der vorliegenden Erfindung in seiner üblichen, dem Fachmann geläufigen Bedeutung verwendet und bezieht sich daher auf ein Halbzeug, welches aus Fasern, bevorzugt Endlosfasern, und einer ungehärteten duroplastischen Kunststoffmatrix besteht.

Der Glimmer kann in dem beschriebenen Verfahren in Partikelform oder in bereits fixierter Form, insbesondere in Form eines Glimmerpapiers, auf das Substrat aufgebracht werden.

Der Begriff "Glimmerpapier" wird in seiner üblichen, dem Fachmann geläufigen Bedeutung verwendet. Unter einem Glimmerpapier versteht man ein Blatt, das gemäß den üblichen Techniken der Papiererzeugung hergestellt wird und überwiegend Glimmerpartikel, meist in Form orientierter plättchenförmiger Partikel. Glimmerpapier mit und ohne Bindemittel ist kommerziell erhältlich.

Zur Fixierung des Glimmerpapiers auf dem Substrat kann vorher eine Klebstoffschicht auf der Substratoberfläche angebracht worden sein. Alternativ kann das Glimmerpapier vor dem Aushärten oder während des Aushärtens des duroplastischen Kunststoffs, also zu einem Zeitpunkt, in dem das Harz noch eine gewisse Klebrigkeit aufweist, mit der Substratoberfläche in Kontakt gebracht werden. Beim anschließenden Aushärten des duroplastischen Kunststoffs erfolgt dann die endgültige Fixierung des Glimmerpapiers auf dem Substrat.

In einer bevorzugten Ausführungsform wird die Glimmer-haltige Schicht S1 in einem elektrostatischen Auftragungsverfahren auf das Substrat aufgebracht. In diesem bevorzugten Verfahren kann eine elektrostatische Aufladung des Glimmer und/oder der Substratoberfläche erfolgen. In einer bevorzugten Variante wird eine Glimmerschicht auf eine Folie aufgebracht und über elektrostatische Wechselwirkungen auf der Folienoberfläche gehalten, gefolgt von dem Übertragen der Glimmerschicht auf das Substrat oder eine auf dem Substrat vorliegende Schicht, wobei dies bevorzugt dadurch erreicht wird, indem die Oberfläche des Substrats oder die auf dem Substrat vorliegende Schicht klebrig ist und die auf der Folie vorliegende Glimmerschicht nach dem in Kontakt bringen mit der Oberfläche des Substrats oder der Schicht an dieser anhaftet. Bevorzugt erfolgt das Übertragen der auf der Folie vorliegenden Glimmerschicht auf das Substrat, welches z.B. als Prepreg vorliegt, indem diese Glimmerschicht mit dem Substrat vor und/oder während des Aushärtens des duroplastischen Kunststoffs in Kontakt gebracht wird.

Bevorzugt wird in diesem elektrostatischen Auftragungsverfahren zunächst eine Folie elektrostatisch (z.B. durch Reibung) aufgeladen und anschließend wird der Glimmer auf die Folie aufgebracht, z.B. durch Aufstreuen von pulverförmigem Glimmer/Glimmerflocken, d.h. Partikelauftrag. Glimmerpartikel ohne direkten Kontakt zur elektrostatisch aufgeladenen Folienoberfläche können z.B. durch entsprechendes Abschütteln dieser Partikel von der Folie wieder entfernt werden.

Dadurch erhält man zunächst eine Folie mit einer sehr dünnen, im Idealfall einlagigen Glimmerpartikelschicht.

In einem nächsten Schritt wird diese Folie mit der Substratoberfläche in Kontakt gebracht und die Glimmerpartikelschicht auf die Substratoberfläche übertragen. Dies wird bevorzugt dadurch erzielt, dass die Substratoberfläche noch eine gewisse Klebrigkeit aufweist, z.B. indem das in Kontakt bringen der Folie mit der Substratoberfläche vor dem Aushärten bzw. während des Aushärtens des duroplastischen Kunststoffes erfolgt und somit das Harz noch eine gewisse Klebrigkeit aufweist. Alternativ kann nach dem Aushärten des duroplastischen Kunststoffs auf der Substratoberfläche eine Klebstoffschicht angebracht werden und die elektrostatisch aufgeladene, mit einer Glimmerschicht versehene Folie mit dieser Klebstoffschicht in Kontakt gebracht werden.

Mit einem solchen elektrostatischen Auftragungsverfahren lässt sich eine sehr dünne, aber dennoch dicht gepackte Glimmerpartikelschicht mit einer ausgeprägten gleichförmigen Orientierung der Partikel auf dem Substrat erzeugen.

Wie bereits oben erwähnt, ist es im Rahmen der vorliegen Erfindung auch möglich, den Glimmer in Pulverform auf das Substrat aufzustreuen. Dabei ist es bevorzugt, dass entweder auf dem Substrat eine Klebstoffschicht angebracht ist oder alternativ das Aufstreuen vor dem Aushärten und/oder während des Aushärtens des duroplastischen Kunststoffs erfolgt. Eine bessere Orientierung der Glimmerpartikel kann dadurch erreicht werden, indem die aufgebrachte Glimmerschicht einem Druck, bevorzugt senkrecht zur Schichtoberfläche, ausgesetzt wird.

Im Rahmen der vorliegenden Erfindung können aufgrund des Aufbringens der Glimmer-haltigen Schicht S1 Werkstoffe für das Kunststoffbauteil eingesetzt werden, deren Brandeigenschaften den Einsatz in gefährdeten Flugzeugbereichen eigentlich verbieten.

Durch Werkstoffaustausch kann eine Verbesserung der Bauteileigenschaften bewirkt werden. So führt z.B. der Einsatz von Aramidfasern im duroplastischen Kunststoff zu einem besseren Impactverhalten. Ein solches Kunststoffbauteil mit Aramidfasern kann z.B. bevorzugt in Frachtraumverkleidungen eingesetzt werden.

Durch gezielten Werkstoffaustausch im Substrat, der durch das Aufbringen der Glimmer-haltigen Schicht S1 ermöglicht wird, lassen sich auch ein besseres elektrisches Isolierverhalten und ein optimiertes Korrosionsverhalten an AL-CKF-Kontaktstellen erzielen.

Wie bereits oben erwähnt, lassen sich im Rahmen der vorliegenden Erfindung Polyesterharze als duroplastische Kunststoffe im Substrat einsetzen, was zu einer Kostensenkung führt. Weiterhin lassen sich Polyethylenfasern (PE-Fasern) anstelle von Glasfasern, z.B. in der Cockpittüre, einsetzen, wodurch sich eine Gewichtsreduzierung erzielen lässt.

Gemäß eines weiteren Aspekts betrifft die vorliegende Erfindung die Verwendung des oben beschriebenen Kunststoffbauteils als Flugzeugbauteil, welches bevorzugt aus Kabinenbauteilen, Frachtraumverkleidungen, elektrischen und/oder elektronischen Baugruppen, Komponenten bzw. Bauteilen in einem druckbelüfteten Raum, Komponenten des Flügels und/oder Komponenten des Flugzeugrumpfes ausgewählt wird.

Anhand der nachfolgenden Beispiele wird die vorliegende Erfindung eingehender erläutert.

### Beispiele

Bei den in den Beispielen verwendeten Substraten handelt es sich um Proben mit folgendem Sandwichaufbau:
Epoxidharz-Glassgewebe- Prepreg
Nomexwabe
Epoxidharz-Glassgewebe- Prepreg

Auf dieses Substrat wurde der Glimmer entweder in Form eines Glimmerpapiers oder als Glimmerpulver (bzw. Glimmerflocken) wie folgt aufgebracht:
Applikation des Glimmerpapiers:
   Probenaufbau mit Prepregs, Glimmerpapier direkt auf die Oberfläche (einseitig) auflegen, Probe bei 125°C / 60 Minuten / 3 MPa zwischen Trennfolie härten.
Applikation der Glimmerflocken:
   Variante 1: Statische Aufladung von Tedlar®-Trennfolien durch Reiben eines Woll-Lappens auf der Folie, Glimmer ausreichend auf die waagerecht liegende Folie streuen; Folie senkrecht halten und vorsichtig abschütteln; es verbleiben die Glimmerpartikel mit direktem Kontakt auf der Folie.
   Variante 2: Prepreg mit Lösungsmittel besprühen (Klebrigkeit erhöhen), Glimmerpartikel aufstreuen und abschütteln.

Die Proben wurden hinsichtlich ihrer Entflammbarkeit, Rauchdichte, Toxizität vermessen.

Hinsichtlich der Entflammbarkeit zeigt sich eine Verbesserung von bis zu 25%.

Hinsichtlich der Rauchdichte zeigt sich eine Verbesserung um bis zu 65%.

Hinsichtlich der Toxizität (HCl) zeigt sich eine Verbesserung von bis zu 70%.

Die Angaben beziehen sich auf den Vergleich zwischen Sandwichbauweisen ohne bzw. mit Glimmer.

## Patentansprüche

1. Kunststoffbauteil für ein Flugzeug, umfassend
(i) ein Substrat, das einen oder mehrere duroplastische Kunststoffe umfasst, und
(ii) eine oder mehrere Schichten, die auf dem Substrat aufgebracht sind, wobei zumindest eine Schicht S1 Glimmer *in einer Menge von mindestens 80 Gew%* umfasst, *der Glimmer in einer Menge von weiniger als 50 g pro m² Substratoberfläche vorliegt und die Schicht S1 direkt auf dem Substrat (j) angebracht ist, so dass der Glimmer in unmittelbarem Kontakt mit der Substratoberfläche ist.*

2. Das Kunststoffbauteil nach einem der vorstehenden Ansprüche, wobei der duroplastische Kunststoff aus einem Epoxidharz, einem Phenolharz, einem Polyesterharz, einem Triazinharz, einem Biopolymerharz aus nachwachsenden organischen Rohstoffen oder einem Gemisch dieser Harze ausgewählt wird.

3. Das Kunststoffbauteil nach einem der vorstehenden Ansprüche, wobei es sich bei dem Substrat um einen Verbundwerkstoff handelt.

4. Das Kunststoffbauteil nach Anspruch 3, wobei die Verstärkungsfasern des Verbundwerkstoffes aus Glasfasern, Kohlefasern, Naturfasern, Aramidfasern, Polyethylenfasern oder Kombinationen dieser Fasern ausgewählt wird.

5. Das Kunststoffbauteil nach einem der vorstehenden Ansprüche, wobei der Glimmer aus Phlogopit, Muskowit, Fluorphlogonit, Mikanit oder einem Gemisch davon ausgewählt wird.

6. Ein Verfahren zur Herstellung des Kunststoffbauteils nach einem der Ansprüche 1-5, umfassend die Bereitstellung eines Substrat, das zumindest einen duroplastischen Kunststoff oder ein zu einem duroplastischen Kunststoff vernetzbares Polymer umfasst, und das Aufbringen einer oder mehrerer Schichten auf das Substrat, wobei zumindest eine Schicht S1 Glimmer umfasst, *wobei die Glimmer-haltige Schicht S1 direkt auf den Substrat aufgebracht wird und das Aufbringen vor und*/*oder während des Aushärtens des duroplastischen Kunststoffs erfolgt.*

7. Das Verfahren nach Anspruch 6, wobei das Substrat in Form eines Prepreg bereit gestellt wird.

8. Das Verfahren nach Anspruch 6 oder 7, wobei das Substrat in Form eines Prepreg bereit gestellt wird, welches eine Glimmer-haltige Schicht S1 bereits aufweist.

9. Das Verfahren nach einem der Ansprüche 6-8, wobei die Glimmer-haltige Schicht S1 in einem elektrostatischen Auftragungsverfahren auf dem Substrat aufgebracht wird.

10. Das Verfahren nach Anspruch 9, wobei eine Glimmerschicht auf eine Folie aufgebracht und über elektrostatische Wechselwirkungen auf der Folienoberfläche gehalten wird, gefolgt von dem Übertragen der auf der Folie vorliegenden Glimmerschicht auf das Substrat unter Ausbildung der Glimmer-haltigen Schicht S1.

11. Verwendung des Kunststoffbauteils nach einem der Ansprüche 1-5 als Flugzeugbauteil, welches bevorzugt aus Kabinenbauteilen, Frachtraumverkleidungen, elektrischen und/oder elektronischen Baugruppen, Komponenten bzw. Bauteilen in einem druckbelüfteten Raum, Komponenten des Flügels und/oder Komponenten des Flugzeugrumpfes ausgewählt wird.

## Claims

1. A plastics material component for an aeroplane, comprising
(i) a substrate, which comprises one or more thermosetting plastics materials, and
(ii) one or more layers which are applied to the substrate, wherein at least one layer S1 comprises mica in an amount of at least 80 % by weight, the mica being present in an amount of less than 50 g per m² substrate surface and the layer S1 being applied directly to the substrate (i) in such a way that the mica is in direct contact with the substrate surface.

2. Plastics material component according to any of the preceding claims, wherein the thermosetting plastics material is selected from an epoxy resin, a phenol resin, a polyester resin, a triazine resin, a biopolymer resin made from renewable organic raw materials or a mixture of these resins.

3. Plastics material component according to any of the preceding claims, wherein the substrate is a composite material.

4. Plastics material component according to claim 3, wherein the reinforcing fibres of the composite material are selected from glass fibres, carbon fibres, natural fibres, aramid fibres, polyethylene fibres or combinations of these fibres.

5. Plastics material component according to any of the preceding claims, wherein the mica is selected from phlogopite, muscovite, fluorphlogopite, micanite or a mixture thereof.

6. A method for producing the plastics material component according to any of claims 1-5, comprising providing a substrate, which comprises at least a thermosetting plastics material or a polymer cross-linkable to form a thermosetting plastics material, and applying one or more layers to the substrate, wherein at least one layer S1 comprises mica, the mica-containing layer S1 being applied directly to the substrate and the applying is taking place before and/or during the curing of the thermosetting plastics material.

7. Method according to claim 6, wherein the substrate is provided in the form of a prepreg.

8. Method according to either claim 6 or claim 7, wherein the substrate is provided in the form of a prepreg which already has a mica-containing layer S1.

9. Method according to any of claims 6-8, wherein the mica-containing layer S1 is applied to the substrate in an electrostatic application process.

10. Method according to claim 9, wherein a mica layer is applied to a film and held on the film surface by electrostatic interactions, this being followed by transferring the mica layer present on the film onto the substrate while forming the mica-containing layer S1.

11. Use of the plastics material component according to any of claims 1-5 as an aeroplane component, which is preferably selected from cabin components, cargo hold linings, electrical and/or electronic modules, components or parts in a pressure-aerated space, components of the wing and/or components of the aeroplane fuselage.

## Revendications

1. Composant en matière plastique pour un aéronef, comprenant :
(i) un substrat, qui comprend une ou plusieurs matières duroplastiques, et
(ii) une ou plusieurs couches qui sont déposées sur le substrat, au moins une couche S1 comprenant du mica en une quantité d'au moins 80 % en poids, le mica étant présent en une quantité inférieure à 50 g par m² de surface de substrat et la couche S1 étant directement rapportée sur le substrat (i) de sorte que le mica est en contact direct avec la surface du substrat.

2. Composant en matière plastique selon l'une des revendications précédentes, dans lequel la matière plastique duroplastique est choisie parmi une résine époxyde, une résine phénolique, une résine polyester, une résine de triazine, une résine de biopolymère provenant de matières brutes organiques de ressource renouvelable ou un mélange de ces résines.

3. Composant en matière plastique selon l'une des revendications précédentes, dans lequel le substrat est un matériau composite.

4. Composant en matière plastique selon la revendication 3, dans lequel les fibres de renforcement du matériau composite sont choisies parmi des fibres de verre, des fibres de carbone, des fibres naturelles, des fibres d'aramide, des fibres de polyéthylène ou des combinaisons de ces fibres.

5. Composant en matière plastique selon l'une des revendications précédentes, dans lequel le mica est choisi parmi le phlogopite, la muscovite, le fluorphlogopite, la micanite ou un mélange de ceux-ci.

6. Procédé de fabrication d'un composant en matière plastique selon l'une des revendications 1 à 5, comprenant la fourniture d'un substrat, qui comprend au moins une matière duroplastique ou un polymère réticulable en matière duroplastique, et le dépôt d'une ou de plusieurs couches sur le substrat, au moins une couche S1 comprenant du mica, la couche S1 contenant du mica étant directement déposée sur le substrat et le dépôt étant effectué avant et/ou pendant le durcissement de la matière duroplastique.

7. Procédé selon la revendication 6, dans lequel le substrat est fourni sous la forme d'un prépreg.

8. Procédé selon la revendication 6 ou 7, dans lequel le substrat est fourni sous forme d'un prépreg, lequel présente déjà une couche S1 contenant du mica.

9. Procédé selon l'une des revendications 6 à 8, dans lequel la couche S1 contenant du mica est déposée sur le substrat dans un procédé de dépôt électrostatique.

10. Procédé selon la revendication 9, dans lequel une couche de mica est déposée sur un film et est maintenue sur la surface de film par l'intermédiaire d'interactions électrostatiques, opération suivie par le transfert de la couche de mica présente sur le film sur le substrat, moyennant la formation de la couche S1 contenant du mica.

11. Utilisation du composant en matière plastique selon l'une des revendications 1 à 5 en tant que composant d'aéronef, lequel est de préférence choisi parmi des composants de cabine, des habillages de soute, des ensembles électriques et/ou électroniques, des composants, respectivement des éléments, dans un espace pressurisé par air, des composants d'aile et/ou des composants de fuselage d'aéronef.
